# EUROPEAN PATENT APPLICATION

(11) **EP 3 955 560 A1**
(43) Date of publication of application: **16.02.2022**
(21) Application number: 20190841.5
(22) Date of filing: 13.08.2020
(51) Int. Cl.: H04N 5/225, H04N 5/341, H04N 5/353, H04N 5/235

(54) **AN IMAGE SENSING SYSTEM**

(71) Applicant: Koninklijke Philips N.V., 5656 AG Eindhoven (NL)
(72) Inventor: VAN ACHT, Victor Martinus Gerardus, 5656 AE Eindhoven (NL)
(74) Representative: Philips Intellectual Property & Standards

(57) **Abstract**

According to an aspect, there is provided an image sensing system for sensing an image of an object, the system comprising: a rolling shutter image sensor and a lens system comprising a lens; and a beam splitter system comprising a beam splitter, the beam splitter system configured to receive an incoming image in the form of a plurality of incoming beams, and to split the incoming image into at least two outgoing images in the form of two sets of outgoing beams corresponding to the incoming beams, the beam splitter system and the lens system being arranged to project the at least two outgoing images onto the rolling shutter image sensor. The rolling shutter image sensor is configured to progressively scan a plurality of image lines on the image sensor, the rolling shutter image sensor progressively scanning along a scanning direction, and wherein the beam splitter system and the lens system are arranged so that the at least two outgoing images are projected on the image sensor offset from one another along the scanning direction.

## Description

### FIELD OF THE INVENTION

The present application relates to an image sensing system for sensing an image of an object.

### BACKGROUND OF THE INVENTION

Image sensing systems, such as cameras, comprising a lens which is configured to project an image onto an image sensor are known. Images may be projected onto a rolling shutter image sensors which is configured to progressively scan an image by capturing an image line by line and progressively reading out the lines as the image is captured. For any image sensing system, it can be desirable to increase the frame rate.

US 2014/168424 discloses a camera comprising two horizontally aligned lenses which are each configured to project an image on an image element.

### SUMMARY OF THE INVENTION

According to a first aspect, there is provided an image sensing system for sensing an image of an object, the system comprising: a rolling shutter image sensor and a lens system comprising a lens; and a beam splitter system comprising a beam splitter. The beam splitter system is configured to receive an incoming image in the form of a plurality of incoming beams, and to split the incoming image into at least two outgoing images in the form of two sets of outgoing beams corresponding to the incoming beams. The beam splitter system and the lens system are arranged to project the at least two outgoing images onto the rolling shutter image sensor. The rolling shutter image sensor is configured to progressively scan a plurality of image lines on the image sensor, the rolling shutter image sensor progressively scanning along a scanning direction, and the beam splitter system and the lens system are arranged so that the at least two outgoing images are projected on the image sensor offset from one another along the scanning direction.

Using a beam splitter to split an incoming image into two outgoing images, and projecting the outgoing images onto an image sensor ensures that the two outgoing images are viewed from the same point, such that there is no shift in perspective in the images projected onto the image sensor.

The projections of the at least two outgoing images on the rolling shutter image sensor may have no overlapping parts (i.e. different outgoing images may not occupy the same space on the image sensor). The beam splitter may be configured to receive the incoming image and to split the incoming image into at least two identical outgoing images in the form of two identical sets of beams corresponding to the incoming beams.

The beam splitter system may be arranged between the lens system and the rolling shutter image sensor.

The beam splitter system and the lens system may be arranged so that the at least two outgoing images projected onto the rolling shutter image sensor do not overlap along the scanning direction.

The image sensing system may comprises a flash light generator configured to generate at least one flash during scanning of every outgoing image.

Scanning each image line may comprise exposing the image line and then reading out the image line. The rolling shutter image sensor may be configured so that the plurality of image lines are each exposed for a length of time, with a time lag between starting exposure for each image line. The length of time and the time lag may be such that each and every image line corresponding to a respective outgoing image is exposed at a respective moment in time, and wherein each and every image line corresponding to a different outgoing image is not exposed at that respective moment in time. The flash light generator may be configured to provide a flash of light at the respective moment in time for each outgoing image.

The beam splitter may be configured to split the incoming image into at least three outgoing images. The beam splitter system may comprise a plurality of beam splitters arranged in series. The beam splitter may comprise a sheet comprising an array of identical prism projections, each prism projection configured to split an incoming image into at least two outgoing images.

The lens may be configured to move relative to the rolling shutter image sensor. The lens of the lens system may be a first lens, and wherein the lens system further comprises at least a second lens arranged in series with the first lens. In other words, the lens system may comprise a plurality of lenses, and any of the plurality of lenses may be moveable relative to other lenses, or relative to the rolling shitter image sensor.

These and other aspects will be apparent from and elucidated with reference to the embodiments described hereinafter.

### BRIEF DESCRIPTION OF THE DRAWINGS

Exemplary embodiments will now be described, by way of example only, with reference to the following drawings, in which:
Figure 1 schematically shows an image sensing system according to a first example;
Figure 2 schematically shows a first example projection onto an image sensor of an image sensing system;
Figure 3 schematically shows a second example projection onto an image sensor of an image sensing system;
Figure 4 schematically shows an image sensing system according to a second example;
Figure 5 shows an example beam splitter for use in the image sensing system; and
Figure 6 schematically depicts a flash schedule to illuminate an object being captured by the image sensing system.

### DETAILED DESCRIPTION OF EMBODIMENTS

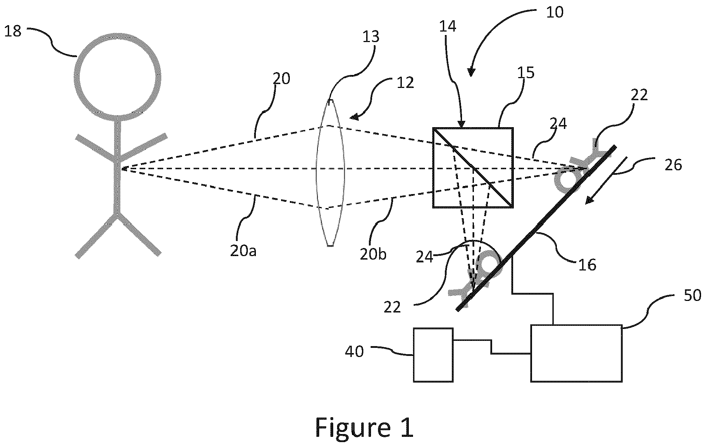

Figure 1 shows a first example image sensing system 10. It comprises a lens system 12, a beam splitter system 14, a rolling shutter image sensor 16, a flash light generator 40 and a processor 50. In this example the lens system 12 comprises a single lens 13, and the beam splitter system 14 comprises a single beam splitter 15.

The image sensing system 10 is configured to receive an incoming image of an object 18 in the form of a plurality of incoming light beams 20, and project at least two outgoing images 22, in the form of at least two sets of a plurality of outgoing light beams 24, onto the rolling shutter image sensor 16. The processor 50 is connected to the rolling shutter image sensor 16 and is configured to process the outgoing images 22 projected on the rolling shutter image sensor 16. The processor 50 is also connected to the flash light generator 40 and is configured to control generation of a flash light by the flash light generator 40 to illuminate the object 18.

In this example, the lens 13 is a converging lens. It will be appreciated that the lens of the lens system may be any suitable lens type for the application in which the image sensor is intended to be used.

The lens 13 is configured to receive a plurality of incoming object beams 20a from the object 18, corresponding to the incoming image, and to converge these beams to a plurality of incoming image beams 20b. The incoming image in the form of the plurality of incoming image beams 20b is directed towards the beam splitter 15, which in this example is configured to split the incoming image into two outgoing images 22, which each correspond to the incoming image, and to project the two outgoing images 22 onto the rolling shutter image sensor 16.

In this example, the beam splitter 15 is configured to split each incoming image beam 20b into two outgoing beams 24 by internally reflecting 50% of the light of each incoming image beam 20b. This means that 50% of the light of each incoming image beam 20b exits the prism without being reflected. Therefore, in this example, each outgoing image 22 is identical.

The rolling shutter image sensor 16 in this example may have a resolution of 640x480. In other examples, it will be appreciated that the rolling shutter image sensor may have any suitable resolution.

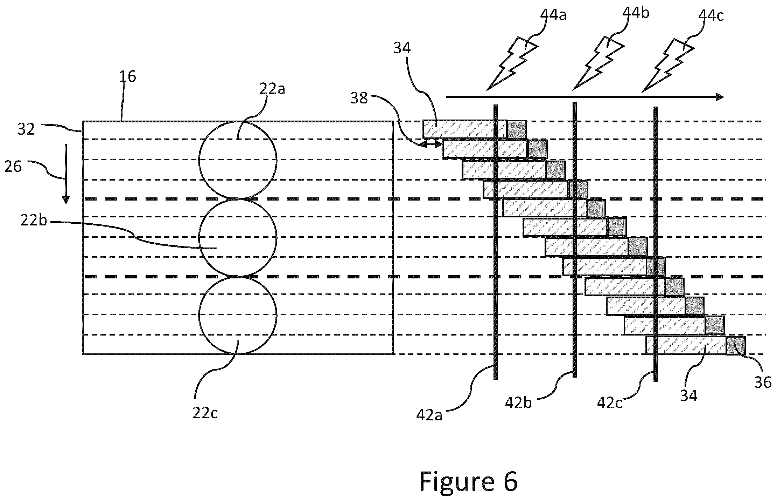

The rolling shutter image sensor 16 defines a plurality of image lines distributed along a scanning direction 26 (best shown in Figure 6). The rolling shutter image sensor 16 is configured to capture the outgoing images 22 projected onto the image sensor 16 by progressively scanning each image line along the scanning direction 26, including exposing each image line on the image sensor 16, and after a predetermined length of time of exposure, reading out each image line progressively to obtain a rolling image.

Since the beam splitter 15 projects two outgoing images 22 onto the rolling shutter image sensor 16, the frame rate of the image sensing system 10 is effectively doubled, without having to increase scanning or processing speed of the processor 50. This doubling of the frame rate results in a reduction in resolution, since the outgoing images 22 projected onto the rolling shutter image sensor are smaller than they would be without such a beam splitter, in order to fit more than one outgoing image 22 onto the image sensor 16. However, in some applications, high resolution is not needed, such as in IPL (Intense Pulse Light) technology, in which a resolution of only 32x24 is needed to monitor skin colour, for example. Since relatively high resolution image sensors are readily available such as 640x480, compared with the necessary resolution for IPL technology for example, the image sensing system 10 of the present application therefore provides a cost effective and efficient method of increasing the frame rate of an image sensor.

In this example, the beam splitter system 14 is arranged between the lens system 12 and the rolling shutter image sensor 16. In other examples, the lens system may be disposed between the beam splitter system and the rolling shutter image sensor. However, having the beam splitter system 14 disposed between the lens system 12 and the rolling shutter image sensor 16, as in this example, enables the use of a smaller beam splitter 15 or a smaller arrangement of the beam splitter system 14, since the lens 13 has already converged the incoming object beams 20a into a smaller area of incoming image beams 20b.

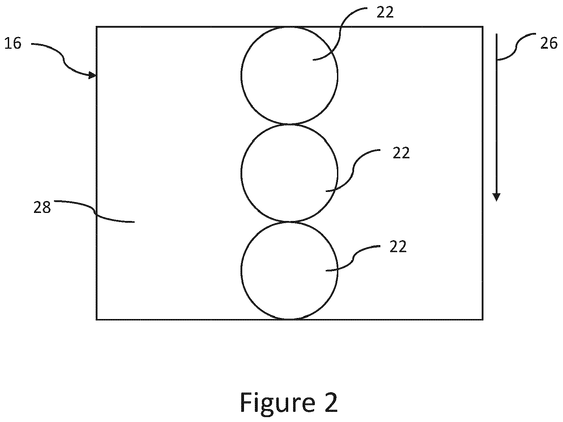

Further, although it has been described that the beam splitter 15 in this example splits the incoming image into two outgoing images 22, in other examples, the beam splitter may split the incoming image into more than two outgoing images, such as shown in Figures 2, 3 and 5 below.

Figure 2 shows a first example projection onto a rolling shutter image sensor 16 from an image sensing system 10 such as described with reference to Figure 1, in which the beam splitter of the beam splitter system is instead configured to split the incoming image into three outgoing images 22.

In this example, the beam splitter system 14 and the lens system 12 are arranged so that the three outgoing images 22 are projected onto the image sensor 16 offset from one another along the scanning direction 26. The three outgoing images 22 are offset from one another so that they do not overlap along the scanning direction 26. This effectively triples the frame rate of the rolling shutter image sensor 16. This also reduces the resolution of each image to 160x160, and there is resolution space 28 on the image sensor 16 which is not utilised.

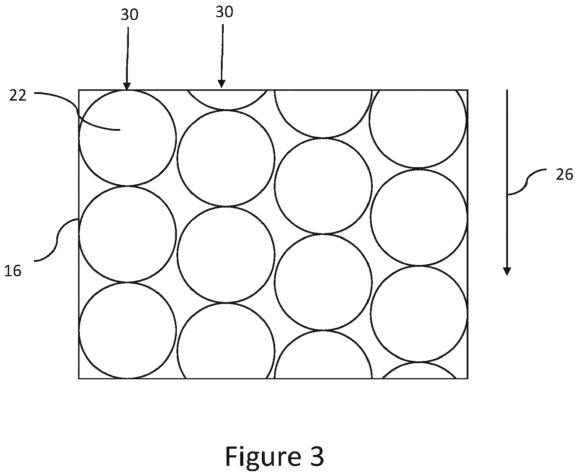

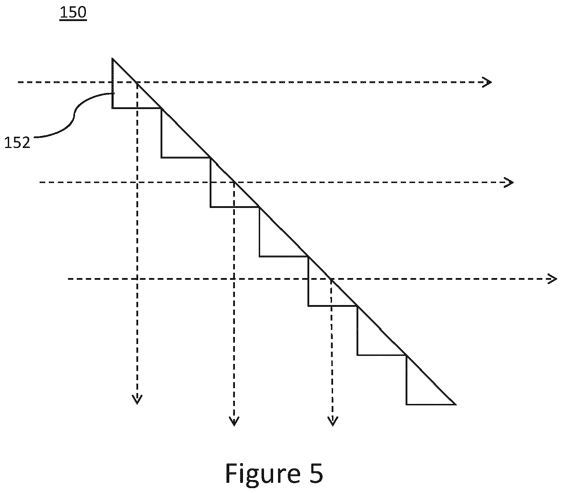

Figure 3 shows a second example projection of outgoing images 22 onto a rolling shutter image sensor 16 from an image sensing system 10 such as described with reference to Figure 1. In this example, the beam splitter system 14 is configured to split the incoming image into 12 outgoing images 22, for example with a beam splitter described with reference to Figure 5.

In this example, the beam splitter system 14 and the lens system 12 are arranged so that the 12 outgoing images 22 are projected onto the rolling shutter image sensor 16 offset from one another along the scanning direction 26. In this example, the outgoing images 22 are overlapping along the scanning direction 26. The outgoing images 22 are arranged in four columns 30, each column extending in the scanning direction 26 and each column 30 is separate from, and does not overlap with, an adjacent column 30. Each column 30 comprises three outgoing images 22 arranged such that they do not overlap along the scanning direction 26. Each column 30 of outgoing images 22 is offset along the scanning direction 26 from an adjacent column, such that the outgoing images 22 of one column partially overlap along the scanning direction 26 with outgoing images 22 of an adjacent column 30.

This effectively increases the frame rate of a rolling shutter image sensor 16 by 12 times, albeit with a reduced resolution of each image to 160x160. It also increase the frame rate compared to the first example projection, as described with reference to Figure 2, by four times without a reduction in resolution of each outgoing image 22. It will be appreciated that these advantages can be realised with any suitable number of outgoing images 22.

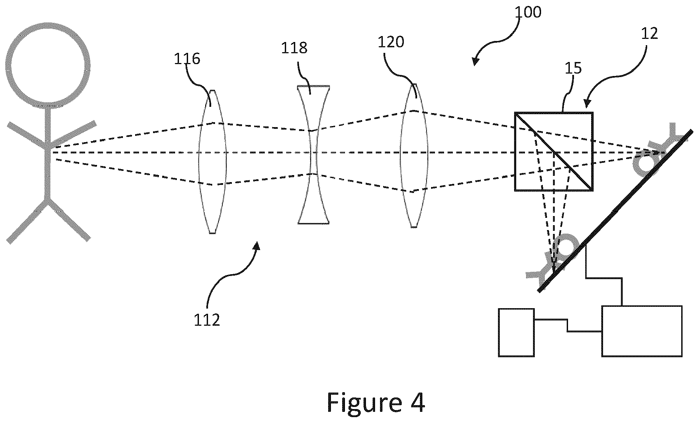

Figure 4 shows a second example image sensing system 100, which comprises similar features to the first example image sensing system 10 described with reference to Figure 1, and differs only in that it comprises a different lens system 112. The lens system 112 of this example comprises multiple lenses, which in this example is three lenses. It will be appreciated that complex lens systems may comprise any number of lenses, to achieve different effects, and that any complex lens system could be used in the image sensing system of the present application.

In this example, the lens system 112 is a variable zoom lens system, and comprises a first converging lens 116, a diverging lens 118, and a second converging lens 120, arranged in series. The diverging lens 118 is arranged between the first converging lens 116 and the second converging lens 120. The first converging lens 116 and the diverging lens 118 are moveable relative to each other, and relative to the second converging lens 120. The first converging lens 116 and the diverging lens 118 are also moveable relative to the rolling shutter image sensor 16, in order to provide a variable zoom. The second converging lens 120 is arranged to be adjacent to the beam splitter 15 in this example.

The arrangement of the beam splitter system 14 being arranged between the lens system 112 and the rolling shutter image sensor 16 is particularly advantageous here, as it permits movement of the moveable first converging lens 116 and the diverging lens 118, without affecting the distance between the second converging lens 120 and the beam splitter system 14.

Figure 5 shows a second example beam splitter 150 for use in an image sensing system 10, 100 such as described with reference to Figures 1 or 4. In this example, the beam splitter 150 comprises a sheet with an array of prism projections 152. In other words the prism projections 152 are triangular projections 152 projecting from the sheet. Each prism projection 152 acts as a separate beam splitter such that each prism projection 152 is configured to split an incoming image into at least two outgoing images (represented for example by the dotted lines on Figure 5). Therefore, an incoming image can be split into a plurality of outgoing images 22 through a plurality of prism projections 152.

Figure 6 shows the first example projection on the rolling shutter image sensor 16 as described with reference to Figure 2, together with a time chart to depict a timed schedule of flashes, generated by the flash light generator 40 of the image sensing system 10, 100, to illuminate the object 18. The processor 50 controls the flash light generator 40 to ensure that generation of flashes occurs with the correct timing.

As explained above with reference to Figure 2, there are three outgoing images 22 projected onto the rolling shutter image sensor 16. Along the scanning direction 26 is a first outgoing image 22a, a second outgoing image 22b, and a third outgoing image 22c in that order.

The rolling shutter image sensor 16 is defined by a plurality of image lines 32 arranged along the scanning direction 26, which are shown by the space between the dotted lines in Figure 6. In this example, the rolling shutter image sensor 16 is divided into 12 image lines 32, and each of the outgoing images 22 is projected onto a group of four adjacent image lines 32. Since the outgoing images 22 do not overlap in the scanning direction 26, each image line 32 sees a portion of only a single outgoing image 22.

Each image line 32 is scanned by the processor 50. In other words each image line 32 is exposed 34 for a predetermined length of time, followed by a readout 36 of the image line 32 by the processor 50, as shown in the time chart. There is a time lag 38 between starting exposure 34 for each subsequent image line 32. In this example, the time lag 38 corresponds to the readout 36 time, such that the readout 36 of each image line 32 occurs sequentially.

The processor 50 controls the time lag 38 and the predetermined length of time for exposing 34 each image line 32, so that each and every image line 32 corresponding to a single outgoing image 22 is exposed at a respective moment in time 42. For example, the first outgoing image 22a is exposed in all four of its image lines 32 at a first moment in time 42a, the second outgoing image 22b is exposed in all four of its respective image lines 32 at a second moment in time 42b and the third outgoing image 22c is exposed in all four of its respective image lines 32 at a third moment in time 42c.

The single moment in time 42 for each outgoing object is different (42a, 42b, 42c) and at each moment in time 42 at which each and every image line 32 of a single outgoing image 22 is exposed, a flash 44 is generated by the flash light generator 40. In other examples, the flash light generator may be controlled by the processor to generate a flash for every image line, such as at the beginning of exposure for every image line, or in the middle of exposure for every image line.

The advantage of timing the flashes to occur only once for every image is a reduction in the amount of power required, since fewer flashed are needed.

In this example, the image lines 32 corresponding to the second outgoing image 22b and to the third outgoing image 22c are not exposed at the first moment in time 42a, the image lines 32 corresponding the first outgoing image 22a and the third outgoing image 22c are not exposed at the second moment in time 42b, and the image lines 32 corresponding to the first outgoing image 22a and the second outgoing image 22b are not exposed at the third moment in time 42c. Therefore, each and every image line 32 of each outgoing image 22 is not exposed at the respective moment in time 42 for a different outgoing image 22.

Although it has been described in both the first example image sensing system 10 and the second example image sensing system 100 that the beam splitter system 14 comprises a single beam splitter 15, in other examples, the beam splitting system may comprise more than one beam splitter arranged in series to continue splitting the beams, and each beam splitter may be configured to split an incoming image into any number of outgoing images.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An image sensing system (10, 100) for sensing an image of an object (18), the system comprising:
a rolling shutter image sensor (16) and a lens system (12, 112) comprising a lens (13, 116, 118, 120); and
a beam splitter system (14) comprising a beam splitter (15), the beam splitter system (14) configured to receive an incoming image in the form of a plurality of incoming beams, and to split the incoming image into at least two outgoing images (22) in the form of two sets of outgoing beams corresponding to the incoming beams, the beam splitter system (14) and the lens system (12, 112) being arranged to project the at least two outgoing images (22) onto the rolling shutter image sensor (16);
wherein the rolling shutter image sensor (16) is configured to progressively scan a plurality of image lines (32) on the image sensor, the rolling shutter image sensor (16) progressively scanning along a scanning direction (26), and wherein the beam splitter system (14) and the lens system (12, 112) are arranged so that the at least two outgoing images (22) are projected on the image sensor offset from one another along the scanning direction (26).

2. An image sensing system (10, 100) according to claim 1, wherein the beam splitter (15) is configured to receive the incoming image and to split the incoming image into at least two identical outgoing images (22) in the form of two identical sets of beams corresponding to the incoming beams.

3. An image sensing system (10, 100) according to claim 1 or 2, wherein the beam splitter system (14) is arranged between the lens system (12, 112) and the rolling shutter image sensor (16).

4. An image sensing system (10, 100) according to any preceding claim, wherein the beam splitter system (14) and the lens system (12, 112) are arranged so that the at least two outgoing images (22) projected onto the rolling shutter image sensor (16) do not overlap along the scanning direction (26).

5. An image sensing system (10, 100) according to claim 4, further comprising a flash light generator (40) and a processor (50) configured to case the flash light generator (40) to generate at least one flash (44) during scanning of every outgoing image (22).

6. An image sensing system (10, 100) according to claim 5, wherein scanning each image line (32) comprises: exposing the image line (32) and then reading out the image line (32);
wherein the rolling shutter image sensor (16) is configured so that the plurality of image lines (32) are each exposed (34) for a length of time, with a time lag (38) between starting exposure for each image line (32), and the length of time and the time lag (38) is such that each and every image line (32) corresponding to a respective outgoing image (22) is exposed (34) at a respective moment in time (42), and wherein each and every image line (32) corresponding to a different outgoing image (22) is not exposed (34) at that respective moment in time (42); and
wherein the processor (50) is configured to cause the flash light generator (40) to generate a flash (44) of light at the respective moment in time (42) for each outgoing image (22).

7. An image sensing system (10, 100) according to any preceding claim, wherein the beam splitter (15) is configured to split the incoming image into at least three outgoing images (22).

8. An image sensing system (10, 100) according to any preceding claim, wherein the beam splitter system (14) comprises a plurality of beam splitters arranged in series.

9. An image sensing system (10, 100) according to any preceding claim, wherein the beam splitter (15) comprises a sheet comprising an array of identical prism projections (152), each prism projection (152) configured to split an incoming image into at least two outgoing images (22).

10. An image sensing system (100) according to any preceding claim, wherein the lens (116, 118) is configured to move relative to the rolling shutter image sensor (16).

11. An image sensing system (100) according to any preceding claim, wherein the lens of the lens system (112) is a first lens (13, 116, 118, 120), and wherein the lens system (112) further comprises at least a second lens (13, 116, 118, 120) arranged in series with the first lens.
